# EUROPÄISCHE PATENTSCHRIFT

(11) **EP 0 496 035 B1**
(45) Veröffentlichungstag und Bekanntmachung des Hinweises auf die Patenterteilung: **18.05.1994**
(21) Anmeldenummer: 91116180.0
(22) Anmeldetag: 24.09.1991
(51) Int. Cl.: F16J 15/32

(54) **Radialwellendichtring**
Oil seal
Joint à lèvre

(30) Priorität: 23.01.1991 DE 4101835
(43) Veröffentlichungstag der Anmeldung: 29.07.1992
(73) Patentinhaber: Firma Carl Freudenberg, 69469 Weinheim (DE)
(72) Erfinder: Johnston, David Ernest, W-6940 Weinheim (DE)

(56) Entgegenhaltungen:
- EP-A- 0 210 301
- EP-A- 0 362 468
- WO-A-87/01169
- NTZ AUTOMOBILTECHNISCHE ZEITSCHRIFT, Band 88, Nr. 1, Januar 1986, Stuttgart,DE; M. KAMMÜLLER et al.: "Physikalische Ursachen der Dichtwirkung von Radial-Wellendichtringen"

## Beschreibung

Die Erfindung betrifft einen Radialwellendichtring mit einer Dichtungsachse und einer die abzudichtende Welle umschließende Dichtlippe aus polymerem Werkstoff, wobei die Dichtlippe innenseitig durch eine hohlkegelig in Richtung der von dem abzudichtenden Raum abgewandten Seite in ihrem Durchmesser erweiterte Innenflächen begrenzt ist, auf der gleichmäßig in Umfangsrichtung verteilte, radial nach innen vorstehende Rippen angeordnet sind.

Ein solcher Radialwellendichtring ist aus der DE-B-11 53 578 bekannt. Danach sind auf der Stirnseite der Dichtlippe bogenförmig ausgebildete Rippen angeordnet, die in Verbindung mit einer Lippenlauffläche, die mit schräg zu der Dichtungsachse verlaufenden Rippen versehen ist, für eine Förderwirkung des abgedichteten Mediums in Richtung des abgedichteten Raumes sorgen soll. Dabei ist allerdings zu beachten, daß die Gebrauchsdauer des Wellendichtrings unbefriedigend ist. Die Dichtlippe des Wellendichtrings unterliegt aufgrund mangelnder Schmierung bei Rotation der abzudichtenden Welle erhöhtem Verschleiß. Mit steigender Gebrauchsdauer des Wellendichtringes sind daher die Abdichtungsergebnisse, insbesondere bei stillstehender Welle wenig befriedigend.

Der Erfindung liegt die Aufgabe zugrunde, einen Radialwellendichtring der eingangs genannten Art derart weiterzuentwickeln, daß sich eine wesentlich höhere Gebrauchsdauer bei verbesserten Abdichtungsergebnissen ergibt und eine Leckage der im abzudichtenden Raum befindlichen Flüssigkeit sowohl bei stillstehender, als auch bei rotierender Welle nicht auftritt.

Diese Aufgabe wird erfindungsgemäß mit den kennzeichnenden Merkmalen von Anspruch 1 gelöst.

Auf vorteilhafte Ausgestaltung nehmen die Unteransprüche Bezug.

Bei dem erfindungsgemäßen Radialwellendichtring ist es vorgesehen, daß die Rippen durch eine sich in Umfangsrichtung fortsetzende Wellung der Innenfläche gebildet sind und daß die Differenz aus den in Umfangsrichtung benachbarten größten und kleinsten Abständen der Innenfläche von der Dichtungsachse kleiner ist als 0,3 mm. Hierbei ist von Vorteil, daß durch die gewellte Innenfläche, deren radial nach innen weisende Rippen unter Vorspannung an der Welle anliegen und deren radial nach außen weisende Rippen die Wellenoberfläche gerade berühren oder einen geringen Abstand davon aufweisen, eine axial gerichtete Pumpwirkung in Richtung des abzudichtenden Raumes erzielt wird. Durch die erfindungsgemäße Ausgestaltung des Radialwellendichtringes ergibt sich eine ausgezeichnete Schmierung zwischen Dichtlippe und angrenzender Welle, was einen außergewöhnlich geringen Verschleiß an der Dichtfläche und eine sehr hohe Gebrauchsdauer bei gleichbleibend guten Abdichtungsergebnissen bedingt. Die Größe der Pumpwirkung ist vom Neigungswinkel der Dichtlippe abhängig. Vorteilhaft darüber hinaus ist, daß durch den erfindungsgemäßen Radialwellendichtring nicht nur flüssigkeitsgefüllte Räume gegen die Umgebung abgedichtet werden können, sondern daß durch die Pumpwirkung des Radialwellendichtringes auch Flüssigkeit an der Dichtlippe vorbei in den abzudichtenden Raum gefördert werden kann und dann, wenn der Fördervorgang abgeschlossen ist, in diesem gehalten wird. Durch verschieden große Abstände der Innenfläche von der Dichtungsachse wird das abzudichtende Medium bei Wellenrotation geschleppt und immer wieder in den abzudichtenden Raum zurückgefördert. Auch bei stillstehender Welle tritt, durch den äußerst geringen Spalt zwischen Welle und Dichtfläche, kein Medium nach außen.

Dieses Verhalten ist abhängig von bestimmten äußeren Bedingungen, wie beispielsweise der Gestalt der Innenfläche, deren Abstände von der Dichtungsachse, der Breite der Dichtlippe und dem Winkel der Dichtlippe in bezug auf die Dichtungsachse. Außerdem beeinflussen die Elastomerwerte des Radialwellendichtrings und die Radialkraft auf diesen seine Funktion. Generell ist anzumerken, daß die Differenz aus den in Umfangsrichtung benachbarten größten und kleinsten Abständen der Innenfläche von der Dichtungsachse vorteilhafterweise kleiner sein kann als 0,3 mm.

Die Innenfläche kann durch in Umfangsrichtung aufeinander folgende Kegelflächen von gedachten Kegeln gebildet sein, die abwechselnd eine radial innerhalb und eine radial außerhalb der Dichtlippe liegende Kegelachse haben. Die gleichmäßige Wölbung der Kegelflächen bewirkt eine gleichmäßige Förderwirkung des abzudichtenden Mediums zurück in den abzudichtenden Raum. Darüber hinaus ist von Vorteil, daß die gleichmäßig ausgebildeten Kegelflächen einfach und wirtschaftlich herstellbar sind.

Die Innenflächen können in Umfangsrichtung sinusförmig gewellt ausgebildet sein. Durch die unterschiedlichen Steigungen entlang der Sinuskurve treten in verschiedenen Bereichen der Dichtlippe verschieden starke Förderwirkungen auf. Durch die Gestalt der sinusförmigen Innenfläche ist der Radialwellendichtring besonders gut an unterschiedliche Viskositäten der abzudichtenden Medien anzupassen.

Die Differenz aus den in Umfangsrichtung benachbarten größten und kleinsten Abständen der Innenfläche von der Dichtungsachse kann kleiner sein als 0,15 mm und ist bevorzugt kleiner als 0,1 mm. Je kleiner die Differenz der Abstände der gewellten Innenfläche von der Dichtungsachse ist, desto größer ist die Förderwirkung in Richtung des abzudichtenden Raumes. Auch die Dichtungswirkung nimmt mit kleiner werdenden Differenzen der Abstände zu, so daß Differenzen, die kleiner sind als 0,1 mm, bevorzugt zur Abdichtung dünnflüssiger Medien Anwendung finden. Größe Differenzen im Bereich zwischen 0,1 mm und 0,3 mm sind wirtschaftlicher herstellbar und zum Abdichten zäherer Medien geeignet.

In Abhängigkeit von den verschiedenen Parametern ergibt sich ein an den jeweiligen Anwendungsfall angepaßten Radialwellendichtring, wenn die Innenfläche zwischen einander benachbarten Scheitelpunkten der Wellung eine Umfangserstreckung von wenigstens 1,5 mm aufweist. Eine Umfangserstreckung zwischen den Scheitelpunkten der Welle von wenigstens 1,5 mm findet insbesondere bei Radialwellendichtringen Anwendung, die einen vergleichsweise geringen Innendurchmesser aufweisen.

Radialwellendichtringe zur Abdichtung gegenüber Wellen mit größeren Durchmessern können eine Innenfläche aufweisen, die zwischen einander benachbarten Scheitelpunkten der Wellung eine Umfangserstreckung von wenigstens 5 mm aufweist. Unabhängig von der Umfangserstreckung zwischen den benachbarten Scheitelpunkten sind zumindest zwei vollständige Wellungen entlang der Innenfläche anzuordnen. Mit zunehmender Länge der Umfangserstreckung werden die Winkel, die von der Innenfläche der Wellung und der angrenzenden Wellenoberfläche gebildet werden, kleiner, wodurch eine bessere Abdichtung insbesondere bei stillstehender Welle erreicht wird sowie eine bessere Förderwirkung des abgedichteten Mediums zurück in den abzudichtenden Raum bei drehender Welle.

Die Innenfläche kann eine axiale Länge von wenigstens 1 mm aufweisen. Hierbei ist von Vorteil, daß eine gute statische und dynamische Abdichtung der Welle gewährleistet ist sowie geringe Belastungen der Innenfläche des Radialwellendichtrings. Beträgt die axiale Länge der Innenfläche wenigstens 1 mm, wird die Gebrauchsdauer aufgrund der geringeren spezifischen Belastung auf die Dichtfläche erheblich verlängert.

Die Innenfläche kann in axialer Richtung beiderseits durch sich senkrecht zu der Dichtungsachse erstreckende Stirnflächen begrenzt sein. Gemäß dieser vorteilhaften Ausgestaltung ist eine genauer definierte Belastung der Innenfläche in radialer Richtung auf die Welle zu erzielen. Außerdem ist die Herstellbarkeit einer Innenfläche, die in axialer Richtung beiderseits durch sich senkrecht zu der Dichtungsachse erstreckende Stirnflächen begrenzt ist, wesentlich vereinfacht.

Die Innenfläche kann auf der von dem abgedichteten Raum abgewandten Seite der Dichtlippe mit der Dichtungsachse einen Winkel einschließen, der zwischen 3 und 20° liegt. Insbesondere in Abhängigkeit von dem abzudichtenden Medium und der Umfangsgeschwindigkeit der Welle können die Pumpwirkung und die Abdichtfunktion an die jeweiligen Gegebenheiten der entsprechenden Anwendungsfälle angepaßt werden.

Eine besonders vorteilhafte Wirkung in bezug auf die Funktion des Radialwellendichtringes und dessen Gebrauchsdauer ergibt sich, wenn die Innenfläche auf der von dem abgedichteten Raum abgewandten Seite der Dichtlippe mit der Dichtungsachse einen Winkel einschließt, der 3,123 bis 3,875° beträgt.

Der Gegenstand der Erfindung wird nachfolgend anhand der Zeichnung weiter verdeutlicht.

Es zeigen:
- Figur 1: eine Dichtlippe des erfindungsgemäßen Radialwellendichtringes in einem stark vergrößerten Ausschnitt, der eine Welle umgibt. Der Radialwellendichtring ist im Schnitt A-A gemäß Figur 3 schematisch dargestellt;
- Figur 2: eine Dichtlippe des erfindungsgemäßen Radialwellendichtringes entlang des Schnittes B-B entsprechend Figur 3;
- Figur 3: eine Radialwellendichtring in schematischer Darstellung in einer Ansicht;
- Figuren 4 und 5: eine stark vergrößerte Dichtlippe eines Radialwellendichtringes, dessen Innenfläche in axialer Richtung beiderseits durch sich senkrecht zu der Dichtungsachse erstreckende Stirnflächen begrenzt ist. Figur 4 zeigt die Dichtlippe gemäß Schnitt A-A aus Figur 3, während Figur 5 die Dichtlippe entlang des Schnittes B-B zeigt.

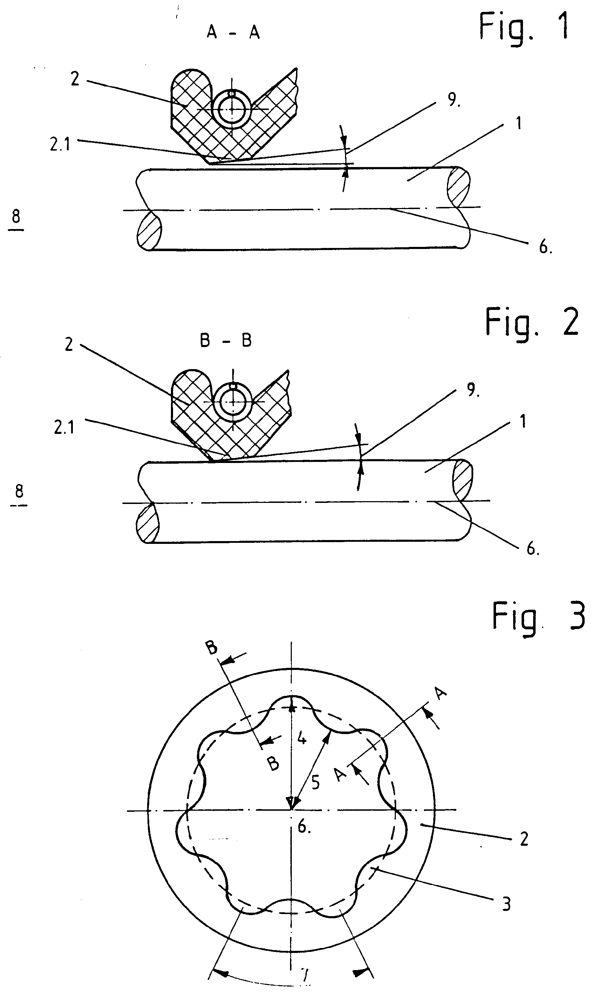

In Figur 1 ist der wesentliche Teil des Radialwellendichtringes mit der Dichtungsachse 6 dargestellt, der eine abzudichtende Welle 1 mit einer Dichtlippe 2 aus polymerem Werkstoff umschließt. Die Dichtlippe 2 ist innenseitig durch eine hohlkegelig in Richtung der von dem abzudichtenden Raum 8 abgewandten Seite, in ihrem Durchmesser erweiterte Innenfläche 2.1 begrenzt. Die Innenfläche 2.1 der Dichtlippe 2 ist im Bereich ihrer maximalen Erhebung über der Welle 1 dargestellt. Durch die vergleichsweise lange Ausdehnung der Innenfläche 2.1 in axialer Richtung ist durch die Kapillarwirkung eine gute statische Abdichtung des abzudichtenden Raumes gewährleistet. Bei Rotation der Welle 1 tritt durch die gewellte Innenfläche 2.1 der Dichtlippe 2 eine in Richtung des abzudichtenden Raumes 8 weisende Förderwirkung ein. Figur 1 stellt den größten Abstand 4 der Innenfläche 2.1 von der Dichtungsachse 6 dar. Die Innenfläche 2.1 schließt auf der von dem abgedichteten Raum 8 abgewandten Seite mit der Dichtungsachse 6 einen Winkel 9 ein, der im allgemeinen zwischen 3 und 20° liegen kann und in diesem Fall ungefähr 6° beträgt.

In Figur 2 ist derselbe Radialwellendichtring wie in Figur 1 dargestellt, jedoch an einer anderen Stelle seines Umfanges geschnitten. In dieser Figur ist der kleinste Abstand 5 der Innenfläche 2.1 von der Dichtungsachse 6 gezeigt. Die Innenfläche 2.1 liegt in diesem Bereich unter Vorspannung an der Welle 1 an. Auch in diesem Fall beträgt der Winkel 9 zwischen der Innenfläche 2.1 und der Dichtungsachse 6 ungefähr 6°.

In Figur 3 ist der Radialwellendichtring gemäß Figur 1 und 2 in einer Ansicht gezeigt. Zur Verdeutlichung der Wirkungsweise sind die größten 4 und kleinsten Abstände 5 der Innenflächen 2.1 von der Dichtungsachse 6 stark vergrößert dargestellt. Die Innenfläche 2.1 ist in Umfangsrichtung sinusförmig gewellt und weist zwischen den einander benachbarten Scheitelpunkten der Wellung eine Umfangserstreckung 7 auf. Unabhängig von der Größe des Radialwellendichtringes sind zumindest zwei vollständige Wellungen mit einer jeweiligen Umfangserstreckung 7 entlang des Innenumfangs des Radialwellendichtringes erforderlich.

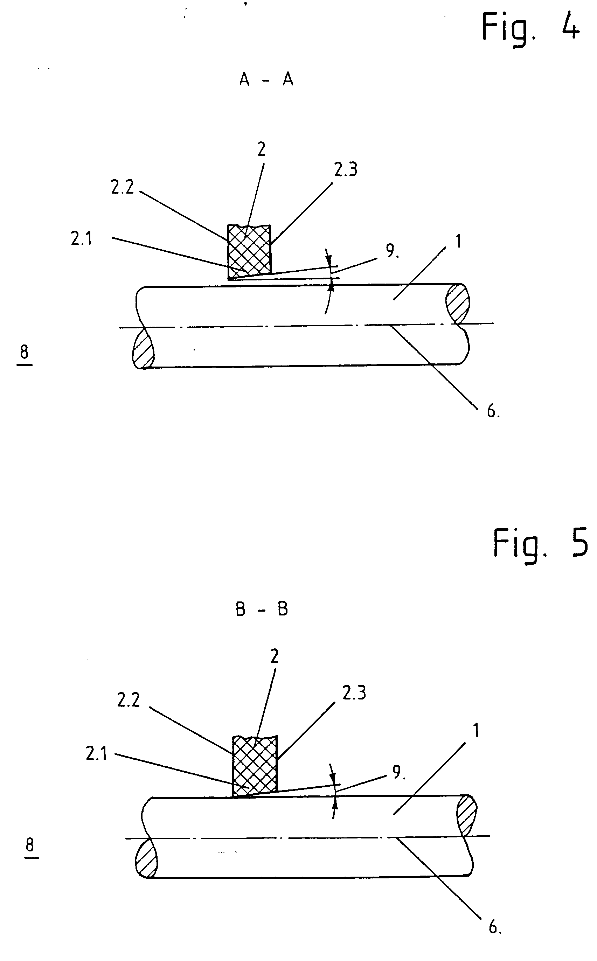

In Figur 4 ist, ähnlich wie in Figur 1, die Dichtlippe 2 im größten Abstand 4 zur Dichtungsachse 6 dargestellt. Auch in diesem Fall berührt die Innenfläche 2.1 die Welle 1 nicht.

Die Innenfläche 2.1 der Dichtlippe 2 ist stark vergrößert schematisch dargestellt und weist bei funktionsfähigen Ausführungen eine axiale Länge von wenigstens 1 mm auf. Die Innenfläche 2.1 ist in axialer Richtung durch sich senkrecht zu der Dichtungsachse 6 erstreckende Stirnflächen 2.2, 2.3 begrenzt. Die sich senkrecht erstreckenden Stirnflächen bewirken eine exakt definierte Belastung der Innenfläche 2.1 in radialer Richtung.
In Figur 5 ist die in Figur 4 gezeigte Dichtlippe mit geringstem Abstand 5 von der Dichtungsachse 6 gezeigt. Die Dichtlippe liegt, wie unter Figur 2 dargestellt, ebenfalls unter Vorspannung an der Oberfläche der Welle 1 an.

## Patentansprüche

1. Radialwellendichtring mit einer Dichtungsachse (6) und einer die abzudichtende Welle (1) umschließende Dichtlippe (2) aus polymerem Werkstoff, wobei die Dichtlippe (2) innenseitig durch eine hohlkegelig in Richtung der von dem abzudichtenden Raum abgewandten Seite in ihrem Durchmesser erweiterte Innenfläche (2.1) begrenzt ist, auf der gleichmäßig in Umfangsrichtung verteilte, radial nach innen vorstehende Rippen (3) angeordnet sind, dadurch gekennzeichnet, daß die Rippen (3) durch eine sich in Umfangsrichtung fortsetzende Wellung der Innenfläche (2.1) gebildet sind und daß die Differenz aus den in Umfangsrichtung benachbarten größten (4) und kleinsten Abständen (5) der Innenfläche (2.1) von der Dichtungsachse (6) kleiner ist als 0,3 mm.

2. Radialwellendichtring nach Anspruch 1, dadurch gekennzeichnet, daß die Innenfläche (2.1) durch in Umfangsrichtung aufeinander folgende Kegelflächen von gedachten Kegeln gebildet ist, die abwechselnd eine radial innerhalb und eine radial außerhalb der Dichtlippe (2) liegende Kegelachse haben.

3. Radialwellendichtring nach Anspruch 1, dadurch gekennzeichnet, daß die Innenfläche (2.1) in Umfangsrichtung sinusförmig gewellt ausgebildet ist.

4. Radialwellendichtring nach Anspruch 1 bis 3, dadurch gekennzeichnet, daß die Differenz aus den in Umfangsrichtung benachbarten größten (4) und kleinsten Abständen (5) der Innenfläche (2.1) von der Dichtungsachse (6) kleiner ist als 0,15 mm.

5. Radialwellendichtring nach Anspruch 1 bis 3, dadurch gekennzeichnet, daß die Differenz aus den in Umfangsrichtung benachbarten größten (4) und kleinsten Abständen (5) der Innenfläche (2.1) von der Dichtungsachse (6) kleiner ist als 0,1 mm.

6. Radialwellendichtring nach Anspruch 1 bis 5, dadurch gekennzeichnet, daß die Innenfläche (2.1) zwischen einander benachbarten Scheitelpunkten der Wellung eine Umfangserstreckung (7) von wenigstens 1,5 mm aufweist.

7. Radialwellendichtring nach Anspruch 1 bis 5, dadurch gekennzeichnet, daß die Innenfläche (2.1) zwischen einander benachbarten Scheitelpunkten der Wellung eine Umfangserstreckung (7) von wenigstens 5 mm aufweist.

8. Radialwellendichtring nach Anspruch 1 bis 7, dadurch gekennzeichnet, daß die Innenfläche (2.1) eine axiale Länge von wenigstens 1 mm aufweist.

9. Radialwellendichtring nach Anspruch 1 bis 8, dadurch gekennzeichnet, daß die Innenfläche (2.1) in axialer Richtung beiderseits durch sich senkrecht zu der Dichtungsachse (6) erstreckende Stirnflächen (2.2, 2.3) begrenzt ist.

10. Radialwellendichtring nach Anspruch 1 bis 9, dadurch gekennzeichnet, daß die Innenfläche (2.1) auf der von dem abgedichteten Raum (8) abgewandten Seite der Dichtlippe (2) mit der Dichtungsachse (6) einen Winkel (9) einschließt, der zwischen 3 und 20° liegt.

11. Radialwellendichtring nach Anspruch 1 bis 10, dadurch gekennzeichnet, daß die Innenfläche (2.1) auf der von dem abgedichteten Raum (8) abgewandten Seite der Dichtlippe (2) mit der Dichtungsachse (6) einen Winkel (9) einschließt, der 3,123 bis 3,875° beträgt.

## Claims

1. A radial shaft seal having a sealing axis (6) and a sealing lip (2) made of polymer material and surrounding the shaft (1) to be sealed off, said sealing lip (2) being bounded on the inside by an inner surface (2.1) which widens in its diameter in the manner of a hollow cone in the direction of the side facing away from the space to be sealed off and on which ribs (3) are arranged which are distributed evenly in the circumferential direction and project radially inwards, characterized in that the ribs (3) are formed by an undulation of the inner surface (2.1) which continues in the circumferential direction, and in that the difference between the circumferentially adjacent greatest (4) and smallest spacings (5) of the inner surface (2.1) from the sealing axis (6) is less than 0.3 mm.

2. A radial shaft seal according to claim 1, characterized in that the inner surface (2.1) is formed by conical surfaces of imaginary cones which follow on from one another in the circumferential direction and have a cone axis which lies alternately radially inside and radially outside the sealing lip (2).

3. A radial shaft seal according to claim 1, characterized in that the inner surface (2.1) is of sinusoidally undulating design in the circumferential direction.

4. A radial shaft seal according to any of claims 1 to 3, characterized in that the difference between the circumferentially adjacent greatest (4) and smallest spacings (5) of the inner surface (2.1) from the sealing axis (6) is less than 0.15 mm.

5. A radial shaft seal according to any of claims 1 to 3, characterized in that the difference between the circumferentially adjacent greatest (4) and smallest spacings (5) of the inner surface (2.1) from the sealing axis (6) is less than 0.1 mm.

6. A radial shaft seal according to any of claims 1 to 5, characterized in that the inner surface (2.1) has a circumferential extent (7) of at least 1.5 mm between mutually adjacent summits of the undulation.

7. A radial shaft seal according to any of claims 1 to 5, characterized in that the inner surface (2.1) has a circumferential extent (7) of at least 5 mm between mutually adjacent summits of the undulation.

8. A radial shaft seal according to any of claims 1 to 7, characterized in that the inner surface (2.1) has an axial length of at least 1 mm.

9. A radial shaft seal according to any of claims 1 to 8, characterized in that the inner surface (2.1) is bounded in the axial direction on both sides by end faces (2.2, 2.3) extending perpendicular to the sealing axis (6).

10. A radial shaft seal according to any of claims 1 to 9, characterized in that, on the side of the sealing lip (2) facing away from the space (8) to be sealed off, the inner surface (2.1) encloses an angle (9) with the sealing axis (6), which angle is from 3 to 20°.

11. A radial shaft seal according to any of claims 1 to 10, characterized in that, on the side of the sealing lip (2) facing away from the space (8) to be sealed off, the inner surface (2.1) encloses an angle (9) with the sealing axis (6), which angle is from 3.123 to 3.875°.

## Revendications

1. Bague d'étanchéité radiale pour arbres comportant un axe de joint (6) et une lèvre d'étanchéité (2) entourant l'arbre (1) à étancher et formée d'un matériau polymère, la lèvre d'étanchéité (2) étant délimitée du côté intérieur par une surface intérieure (2.1) en forme de cône creux, de diamètre s'élargissant en direction du côté opposé au volume à étancher et sur laquelle sont disposées des nervures (3), réparties uniformément dans une direction circonférencielle et orientées radialement vers l'intérieur, caractérisée en ce que les nervures (3) sont formées par une ondulation de la surface intérieure (2.1) orientée dans une direction circonférencielle et en ce que la différence entre les plus grands (4) et les plus petits (5) espacements, adjacents dans une direction circonférencielle, de la surface intérieure (2.1) par rapport à l'axe de joint (6) est inférieure à 0,3 mm.

2. Bague d'étanchéité radiale pour arbres selon la revendication 1, caractérisée en ce que la surface intérieure (2.1) est constituée par des surfaces coniques, se succédant mutuellement dans une direction circonférencielle, de cônes imaginaires, qui ont alternativement un axe de conicité situé radialement à l'intérieur de la lèvre d'étanchéité (2) et un axe de conicité situé radialement à l'extérieur de cette lèvre.

3. Bague d'étanchéité radiale pour arbres selon la revendication 1, caractérisée en ce que la surface intérieure (2.1) est pourvue d'un profil ondulé sinusoïdal dans la direction circonférencielle.

4. Bague d'étanchéité radiale pour arbres selon l'une des revendications 1 à 3, caractérisée en ce que la différence entre les plus grands (4) et les plus petits (5) espacements, adjacents dans une direction circonférencielle, de la surface intérieure (2.1) par rapport à l'axe de joint (6) est inférieure à 0,15 mm.

5. Bague d'étanchéité radiale pour arbres selon une des revendications 1 à 3, caractérisée en ce que la différence entre les plus grands (4) et les plus petits (5) espacements, adjacents dans une direction circonférencielle, de la surface intérieure (2.1) par rapport à l'axe de joint (6) est inférieure à 0,1 mm.

6. Bague d'étanchéité radiale pour arbres selon une des revendications 1 à 5, caractérisée en ce que la surface intérieure (2.1) a, entre des sommets mutuellement adjacents de l'ondulation, un espacement circonférenciel (7) d'au moins 1,5 mm.

7. Bague d'étanchéité radiale pour arbres selon une des revendications 1 à 5, caractérisée en ce que la surface intérieure (2.1) a, entre des sommets mutuellement adjacents de l'ondulation, un espacement circonférenciel (7) d'au moins 5 mm.

8. Bague d'étanchéité radiale pour arbres selon une des revendications 1 à 7, caractérisée en ce que la surface intérieure (2.1) a une longueur axiale d'au moins 1 mm.

9. Bague d'étanchéité radiale pour arbres selon une des revendications 1 à 8, caractérisée en ce que la surface intérieure (2.1) est délimitée, en direction axiale et des deux côtés, par des surfaces frontales (2.2, 2.3) s'étendant perpendiculairement à l'axe de joint (6).

10. Bague d'étanchéité radiale pour arbres, selon une des revendications 1 à 9, caractérisée en ce que la surface intérieure (2.1) fait, sur le côté de la lèvre d'étanchéité (2) opposé au volume à étancher (8), avec l'axe de joint (6) un angle qui est compris entre 3 et 20°.

11. Bague d'étanchéité radiale pour arbres, selon une des revendication 1 à 10, caractérisée en ce que la surface intérieure (2.1) fait, sur le côté de la lèvre d'étanchéité (2) opposé au volume à étancher (8), avec l'axe de joint (6) un angle (9) qui compris entre 3,123 et 3,875°.
